# EUROPEAN PATENT SPECIFICATION

(11) **EP 1 657 529 B1**
(45) Date of publication and mention of the grant of the patent: **17.03.2010**
(21) Application number: 04425849.9
(22) Date of filing: 15.11.2004
(51) Int. Cl.: G01D 7/00

(54) **Digital indicator**
Digitale Anzeige
Indicateur numérique

(43) Date of publication of application: 17.05.2006
(73) Proprietor: S.I.E.M. S.r.l., 73100 Lecce (IT)
(72) Inventor: Aguglia, Jorge Miguel, 73100 Lecce (IT)
(74) Representative: Robba, Eugenio

(56) References cited:
- DE-A1- 10 310 233
- DE-U1- 8 912 505
- GB-A- 2 331 581
- "Conrad Voorjaarscatalogus 2004" 2004, CONRAD ELECTRONIC NEDERLAND BV. , THE NETHERLANDS , XP002330181 * page 212 * -& CONRAD ELECTRONIC NED. BV:[Online] 2000, XP002330006 GERMANY Retrieved from the Internet: URL:http://produktinfo.conrad.com/datenbla etter/100000-124999/120450-an-01-ml-multit ester_5in1_de-en-fr-nl.pdf> [retrieved on 2005-05-31]

## Description

### Technical Field

Present invention generally relates to indicator instruments apt to display, used in combination with measuring devices or sensors, values representative of executed measurements.

In particular, present invention relates to indicator instruments (indicators or instruments) of digital type that are used, for example, in nautical, auto-motive, aeronautical and aerospace field.

### Background Art

Indicators apt to be used in the nautical, auto-motive, aeronautical and aerospace areas are known in the art. Such indicators allow the user to analyse at any given moment the state of the value of interest, which may be, for example, the battery voltage, the fuel level, the engine oil pressure, the water temperature, etc.

As it is known, the indicators available in the market provide their indications in many ways:
- by means of a pointer guided by a moving coil element; such pointer type indicators are the more extensively used. They have a circular or square shape, allow an even considerable parallax error in their indications, and signal critical situations only by visual information obtained through a light or a LED;
- by means of an alphanumeric display; such indicators are often used for obtaining information with high accuracy. Generally, their shape is not compatible with the sockets on the dashboard made for pointer type indicators. For this reason special dashboard sockets need to be made for them;
- sometimes (for example for displaying the fuel level), by means of a graphical display which indicates the value both in numerical and graphical form. Often, such indicators are used for obtaining high precision and graphical information of measured values in comparison with a reference range (full scale). As the experience with alphanumeric displays shows, their shape is not compatible with the sockets on the dashboard made for pointer type indicators. For this reason special dashboard sockets need to be made for them.

For example, from DE_10310233A1 an indicator instrument for motor vehicles is known including a pointer arranged for selectively indicating different ranges of values and a switch arranged for manually selecting the range of values to be indicated.

A common problem with all the above known indicators is that they can solely perform a certain function which is "wired" to the indicator itself during manufacturing. Such a thing, "wiring a function" during manufacturing, implies that an indicator buyer may solely use the indicator for performing the function it has been bought for, that is, for example, the function of fuel indicator, if that was the expected function, or the function of indicator of other certain values on the basis of respective buy expectations.
Applicant has noted that the stated problem does strongly limit the flexibility both of the manufacturer and of the buyer of such instruments or indicators and that, therefore, it would be desirable to make available indicators that have flexible characteristics that would allow to overcome the mentioned problem.

In the field of measuring instruments it is also known, for example, from patent application DE_89_12505U1 a measuring instrument including first display elements for displaying numerical values and further display elements for displaying a digital representation of the measured values.

From "Conrad Voorjaarscatalogus 2004" a multifunctional measurement device or multitester 5 in 1 is known including a display for displaying measurement values and a range selector or switch arranged for manually selecting the range of values to be measured and displayed.

From GB-A-2331581 it is known a multimeter arranged for determining the temperature of a surface by non-contact measurement of radiation received at a distance.

The known multimeter includes a display and a switch for manually selecting the range of values to be measured and displayed.

A common problem of the above instruments or devices is that they are arranged for displaying a selected range of values by manually selecting the range of values to be measured and displayed.

### Disclosure of the Invention

Object of present invention is a digital type indicator apt to overcome the above mentioned limits.

According to the present invention such an object is achieved by means of an indicator instrument that has the features set forth in the claims that follow.

The invention also relates to a measuring system comprising the indicator instrument according to the invention, a matrix of indicator instruments, a method for configuring the indicator instrument as well as a computer program product loadable in the memory of at least one computer and including software code portions for configuring the indicator instrument according to the invention. Claims are an integral part of the teaching pertaining to the present invention.

According to a preferred embodiment, the indicator instrument of present invention is configured for being externally programmed, whereby for certain function to be carried out they may be selectively chosen as a function of a certain measuring device connected or connectable to the indicator instrument.

According to another feature, the indicator instrument of present invention is configurable even after, for example, its installation in the vehicle or boat dashboard.

According to yet another feature of present invention, the indicator instrument (indicator) may be combined with other instruments or indicators of the same type or of a different type and may be used synchronically with other indicators for indicating, for example, alarm conditions.

### Brief Description of Drawings

These and further features and advantages of the present invention will become clearer from the following detailed description of a preferred embodiment, provided by way of a non limiting example with reference to the attached figures, wherein:
Figure 1 depicts a general block diagram of a measuring system comprising an indicator instrument according to the invention;
Figure 2 depicts a layout exemplifying a display device according to the invention; and
Figure 3 depicts a block diagram of a controlling circuit of an indicator according to the invention.

### Best Mode for carrying out the Invention

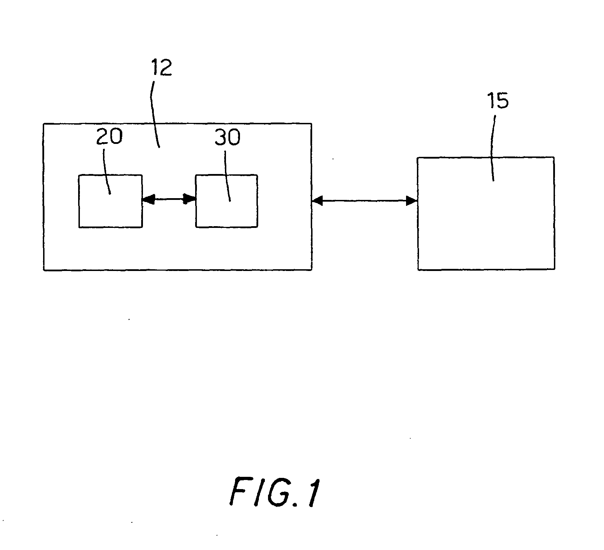

With reference to Figure 1, a measuring and displaying system (measuring system) used, for example, in the nautical, auto-motive, aeronautical, aerospace fields, comprises an indicator instrument (indicator or digital indicator) 12, according to present invention, and a measuring or measurement device 15, of known type, connected in a known way, to the indicator instrument 12 and capable of transmitting to the same indicator 12 values indicative of the measurements to be displayed, for example, by the same indicator 12.

The indicator 12, according to a preferred non limiting embodiment, comprises a display device (display) 20 and a control circuit 30.

The control circuit 30 is connected both to the measuring device 15 (sensor) and, as will be explained later in more detail, to the display 20 for transmitting to this display 20 values measured by a certain measuring device 15.

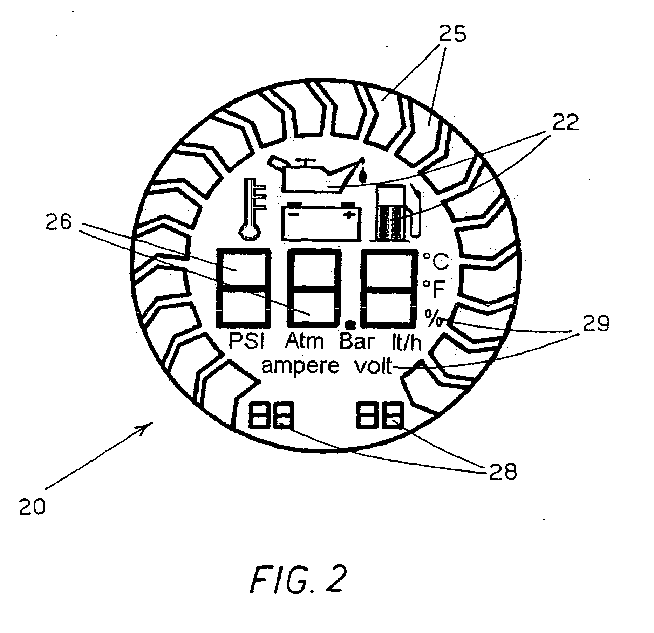

The display 20 (Fig.1 and Fig.2) comprises a plurality of display entities (entities), 22, 25, 26, 28, 29 respectively, that are selectively actuatable and that are arranged for displaying, for example, graphical symbols and/or measured values and/or measurement units and leaving invisible entities that are not selected.

In particular, the display 20, according to a preferred embodiment, comprises a plurality of icons 22, for example 4 icons, representing each a different sensor 15 connectable to the indicator 12; a plurality of indicators of units of measure 29, for example 9 indicators that are selectable during the pre-setting phase at the factory that manufactures the indicator 12; and a plurality of external arrow-shaped marks 25 that are apt to provide graphical indications proportional, in a predetermined range, to the value measured by the measuring device 15.

The display 20 further comprises an alphanumeric display 26, for example an alphanumeric display having three digits comprised each of 7 segments and a dot. Such an alphanumeric display 26 is configured, for example, for displaying numerical indications of values measured by the measuring device 15.

The display 20 also comprises a further alphanumeric display 28, for example an alphanumeric display having four digits comprised each of 7 segments. This further alphanumeric display 28 is configured, for example, for displaying a predetermined measurement range.

The display 20 as described is apt to display , for example, when it is connected to a temperature sensor:
- the temperature indication, by selecting among the icons 22, the icon representing a thermometer;
- the indication of the unit of measure, by selecting among the units of measure 29 °C (centigrade degrees) or °F (Fahrenheit).

When the indicator 12 is connected to a pressure sensor, for example an oil pressure sensor, it is apt to display:
- the oil pressure indication, by selecting among the icons 22, the icon representing an oil tank;
- the unit of measure indication 29 by selecting among ATM, PSI and BAR.

Similarly, when the indicator 12 is connected to a battery, it can display the indication of the voltmeter or of the amperometer through an icon representing a battery. In such a case the unit of measure indicated on the display will be, respectively, Volt or Ampere.

When the indicator 12 is connected to a gasoline level sensor, the consumption indication icon displayed corresponds to the fuel indicator.

In such a case the icon will be lighted steadily or it will be flashing. The unit of measure for the fuel consumption will be, for example 1/h (litres/hour).

The four digit alphanumeric display 28 may be used for indicating the measurement range relating the entity measured by the sensor 15 connected to the indicator 12.

The range indication may be selected on the basis of the programs (firmware or software) developed during the indicator 12 design phase, whether in factory, for example if it is a fixed type range (i.e. a range having constant extremes), or may be updated in field, for example if it is a variable type range that changes depending on the type of the measured value.

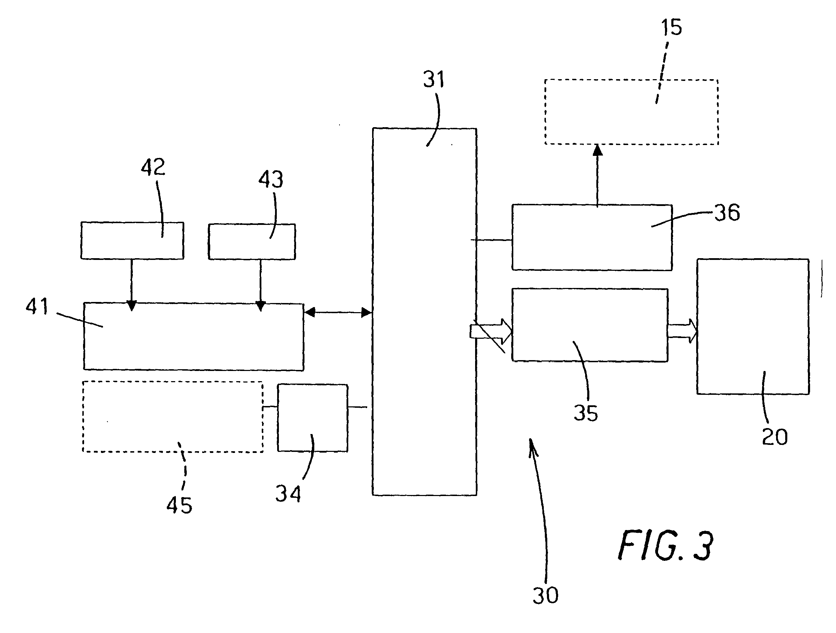

The control circuit 30 (Fig.1, Fig.3) comprises a microprocessor circuit (microcontroller) 31, a first interface circuit 36, placed between the microcontroller 31 and the sensor 15, and a second interface circuit 41, placed between the microcontroller 31 and light effect devices 42, for example LEDs (Light Emitting Diodes), and/or acoustic alarms 43.

The second interface circuit 41 may be further connected to the external marks 25 (not depicted in Fig.3) and configured for activating, under the microcontroller 31 control, a visual alarm through the flashing of the marks, if the entities measured by the sensor 15 connected to the indicator 12 are out of a predetermined range.

The control circuit 30 also comprises, a controller 35, for example a serial type controller, placed between the microcontroller 31 and the display 20 and capable of handling communications between the microcontroller 31 and the display 20.

Finally, the control circuit 30 connected to the microcontroller 31 comprises a communication device 34, for example a communication port that is apt to handle alternatively the serial protocol RS232 or the I2C (Inter Integrated Circuits) protocol, of known type.

According to a preferred embodiment, the communication device 34 is configured for enabling communications between the microcontroller 31 and external devices 45.

For example, the communication device 34, on the basis of programs or program modules (firmware or software) developed in the indicator 12 design phase and stored on the microcontroller 31 when configured as a serial port, is apt to allow communications to and from external programming devices (for example a Personal Computer).

Alternatively, the communication device 34, on the basis of programs (firmware or software) developed in the indicator 12 design phase and stored on the microcontroller 31, when configured in accordance with the I2C protocol, is apt to enable the indicator instrument 12 to communicate, for example, with other instruments or indicators configured with the same type of protocol.

The advantage of such an alternative type of communication is that it allows to install a plurality or a set of indicator instruments 12, for example mutually interconnected through the communication device 34 according to a matrix architecture.

According to such a configuration and on the basis of programs (firmware or software) developed in the indicator 12 design phase and stored on the microcontroller 31, it is provided that one of the indicator instruments 12 is set up, in factory for example, as a master indicator or as an indicator having high priority. According to such a configuration, when it is necessary, as for example in case of displaying synchronous alarms (i.e. when it could be of use to display multiple and synchronous visual alarm signals), the master indicator is apt to activate the synchronous alarms on the connected indicators by means of suitable commands.

The operation of the indicator instrument 12 as disclosed may be, for example, the following one.

As soon as the indicator is assembled but, for example, not installed in an instrument panel, the indicator instrument 12, thanks to the programs stored on the microcontroller 31, is configured either in the factory or in the field, by means of a PC and through the communication device 34, in order to be connected, for example, to any sensor of a predetermined list.

In particular, thanks to the serial communication port actuatable through the communication device 34, it is possible, by means of an external Personal Computer (PC), to set up the indicator either during the production or during delivery and/or retail sales. Such a set up is possible, for example, through a Visual Basic interface that may be stored, for example, on the PC memory and configured, according to a preferred embodiment, in order to allow to select, for example, a group of parameters of the indicator instrument from a set of parameters listed hereafter:
- instrument type (voltmeter, amperometer, fuel level, oil pressure, air temperature, oil and water, average and/or instantaneous consumption indicator);
- unit of measure (ATM, BAR, PSI, Volt, Ampere, °C, °F, %, litres/hour);
- starting range (minimum);
- final range (maximum);
- instrument priority;
- alarm status or conditions.

According to further embodiments, the communication device 34 and the software interface is apt to allow, for example, to modify on site the indicator or instrument set up, i.e. even after the instrument has been installed in the instrument panel.

If the indicator instrument 12 is installed, for example in a single instrument panel, together with one or a plurality of instruments of the same type and such instruments are interconnected through the communication device 34, then in the presence, for example, of an alarm signal reported by an instrument with high priority this instrument will send a signal through the network I2C to other instruments in order to activate alarms synchronously.

In this situation, all the instruments, for example, will start flashing for some seconds synchronously followed (for example, at predetermined time intervals) by a pause during which only the instrument that reported the alarm will flash.

Applicant believes that such an example of danger situations management could be one among other possible innovative characteristics of present invention: according to the above example it is possible to conduct the contemporary analysis of all the measured values and it is possible to identify anomalous situations not reportable through a single value analysis.

As already disclosed above in the case of synchronous alarms, the alarm conditions are set up, for example, during a programming phase and are managed by a master or high priority indicator (selected during the set up phase through the communication device 34). In case of anomalous or dangerous situations the master indicator will activate synchronous alarms.

As disclosed, the indicator instrument is an innovative digital indicator fully configurable and capable of providing the user with the value information of an entity both in numeric form and in graphic form.

In the preferred embodiment, the instrument is apt to replace, without any other interface device, the pointer type indicators, that are still in use, for example in the nautical, auto-motive, aeronautical, aerospace fields now.

In comparison with the pointer type indicators, the instrument according to present invention is apt to provide the user with a set of important advantages either mechanical and electrical, or ergonomic and aesthetic.

One of the objectives of the instrument is to perform, for example, a function of an instrument with double indication of values. This instrument should be configurable and should be able to comprise in one sole instrument the characteristics of a plurality of measuring instruments. At the same time it should be completely compatible with other pointer indicators available in the market.

Moreover, in the preferred embodiment, the display and the implemented control logic make the instrument very simple in use, with high reading precision, neither requiring calibration nor having mechanical friction due to the lack of moving mechanical parts.

In addition, the use of electronic circuitry permits, for example, to have an instrument of lesser thickness. This is achieved by reducing the overall dimensions and will allow to install it either in a predetermined socket on the dashboard or directly on the dashboard.

The presence, in the preferred embodiment, of visual and/or acoustic alarms, either single or synchronous with the other instruments installed on the dashboard, together with the ability of the instruments to communicate with each other by means, for example, of the IC2 type communications, is apt to permit the intelligent activation of complete monitoring of the measured values and the optimised signalling of danger situations.

Obvious changes and variations may be possible to the above disclosure, as regards dimensions, shapes, materials, components, circuit elements, connections and contacts, as well as circuitry, depicted construction and functioning method details without departing from the scope of the invention as defined by the claims that follow.

## Claims

1. Indicator instrument comprising
- a display device (20);
- a control circuit (30) connected to said display device (20) and arranged for transmitting to said display device (20) signals indicating values measured by a certain type of a measuring device (15) connectable to said control circuit (30);said display device (20) comprising a plurality of display entities (22, 25, 26, 28, 29) that are selectively actuatable by said control circuit (30) for displaying selected display entities and for leaving invisible not selected display entities of said plurality of display entities (22, 25, 26, 28, 29);
**characterised in that**
said control circuit (30) comprises
- a communication device (34) apt to be connected to an external device (45) configured for setting up said control circuit (30) to selectively actuate said plurality of display entities (22, 25, 26, 28, 29) on the basis of the type of measuring device (15) connectable to said control circuit (30).

2. Indicator instrument (12) according to claim 1, **characterised in that** said plurality of display entities (22, 25, 26, 28, 29) comprises display entities selectable from a group comprising
- icons (22) representing measuring instrument types;
- graphical marks (25);
- display entities (26, 28) for displaying numerical values.

3. Indicator instrument (12) according to claim 1 or 2, **characterised in that** said communication device (34) is configured as a serial type port.

4. Indicator instrument (12) according to claim 1 or 2, **characterised in that** said communication device (34) is apt to be connected to at least one further indicator instrument (12) for communicating with said at least one further indicator instrument (12) through a certain communication protocol.

5. Indicator instrument (12) according to claim 4 **characterised in that** said certain communication protocol is an Inter Integrated Circuits (I2C) protocol.

6. Indicator instrument (12) according to claim 4 or 5 configured for co-operating with said at least one further indicator instrument (12) in order to activate synchronous alarms comprising functions selected from the group consisting of:
- synchronous activation of display devices (20) associated to said indicator instruments (12) interconnected each other;
- alternating activation of said display devices (20);
- a combined activation of said synchronous activation and of said alternating activation.

7. Measuring system comprising at least a first indicator instrument (12) according to claims 1 to 6 and at least a first measuring device (15) connected to said indicator instrument (12).

8. Measuring system according to claim 7
comprising
- at least a second indicator instrument (12) and at least a second measuring device (15) connected to said second indicator instrument (12);
said first indicator instrument having a first priority level, and said second indicator instrument being connected to said first indicator instrument and having a second priority level lower than said first priority level;
whereby said first indicator instrument (12) is configured for activating co-ordinated and predetermined functions of said first indicator instrument (12) and of said second indicator instrument (12) on the basis of measurements made by said first type of measuring device (15) and/or by said second type of measuring device (15).

9. Method for configuring an indicator device (12) having a display device (20) and a control circuit (30) connected to said display device (20);
wherein said display device (20) comprises a plurality of display entities (22, 25, 26, 28, 29) that are selectively actuatable by said control circuit (30) for displaying selected display entities and for leaving invisible not selected display entities of said plurality of display entities (22, 25, 26, 28, 29);
**characterised by** the step of
- setting up by means of an external device (45) said control circuit (30) to selectively actuate said plurality of display entities (22, 25, 26, 28, 29) on the basis of the type of measuring device (15) connectable to said control circuit (30).

## Patentansprüche

1. Anzeigeinstrument mit:
- einer Displayeinrichtung (20);
- einem Steuerkreis (30), der an die Displayeinrichtung (20) angeschlossen und zur Übermittlung von Signalen an die Displayeinrichtung (20) angeordnet ist, die Werte anzeigen, die von einem bestimmten Typ einer an diesen Steuerkreis (30) anschließbaren Messeinrichtung (15) gemessen werden, wobei die Displayeinrichtung (20) eine Vielzahl von Displayelementen (22, 25, 26, 28, 29) umfasst, die vom Steuerkreis (30) wahlweise betätigbar sind, um ausgewählte Displayelemente anzuzeigen und nicht ausgewählte Displayelemente aus der Vielzahl von Displayelementen (22, 25, 26, 28, 29) unsichtbar zu lassen;
**dadurch gekennzeichnet, dass**
der Steuerkreis (30) Folgendes aufweist:
- ein Kommunikationsgerät (34) zum Anschliessen an eine externe Einrichtung (45), die zur Einstellung des Steuerkreises (30) konfiguriert ist, um die Vielzahl von Displayelementen (22, 25, 26, 28, 29) an Hand des Typs der an den Steuerkreis (30) anschließbaren Messeinrichtung (15) wahlweise zu betätigen.

2. Anzeigeinstrument (12) nach Anspruch 1, **dadurch gekennzeichnet, dass** die Vielzahl von Displayelementen (22, 25, 26, 28, 29) Displayelemente aufweist, die aus einer Gruppe auswählbar sind, die:
- die Messinstrumenttypen darstellende Icons (22);
- graphische Zeichen (25);
- Displayelemente (26, 28) zur Anzeige numerischer Werte
aufweist.

3. Anzeigeinstrument (12) nach Anspruch 1 oder 2, **dadurch gekennzeichnet, dass** das Kommunikationsgerät (34) nach Art eines seriellen Anschlusses ausgebildet ist.

4. Anzeigeinstrument (12) nach Anspruch 1 oder 2, **dadurch gekennzeichnet, dass** das Kommunikationsgerät (34) an mindestens ein weiteres Anzeigeinstrument (12) anschließbar ist, um mit dem mindestens einen weiteren Anzeigeinstrument (12) über ein bestimmtes Kommunikationsprotokoll zu kommunizieren.

5. Anzeigeinstrument (12) nach Anspruch 4, **dadurch gekennzeichnet, dass** das bestimmte Kommunikationsprotokoll ein Inter Integrated Circuits (I2C) Protokoll ist.

6. Anzeigeinstrument (12) nach Anspruch 4 oder 5, das zur Zusammenarbeit mit dem mindestens einen weiteren Anzeigeinstrument (12) ausgelegt ist, um synchrone Alarme zu aktivieren, die Funktionen aufweisen, die aus folgender Gruppe ausgewählt sind:
- synchrone Aktivierung von Displayeinrichtungen (20), die mit den untereinander verbundenen Anzeigegeräten (12) verbunden sind;
- alternierende Aktivierung der Displayeinrichtungen (20);
- kombinierte Aktivierung der synchronen und der alternierenden Aktivierung.

7. Messsystem mit mindestens einem ersten Anzeigeinstrument (12) nach den Ansprüchen 1 bis 6 und mit mindestens einer ersten, an das Anzeigeinstrument angeschlossenen Messeinrichtung (15).

8. Messsystem nach Anspruch 7 mit:
- mindestens einem zweiten Anzeigeinstrument (12) und mindestens einer zweiten, an das zweite Anzeigeinstrument (12) angeschlossenen Messeinrichtung (15);
bei dem das erste Anzeiginstrument eine erste Prioritätsstufe hat und das zweite Anzeigeinstrument an das erste Anzeigeinstrument angeschlossen ist und eine zweite Prioritätsstufe hat, die niedriger ist als die erste Prioritätsstufe:
bei dem das erste Anzeigeinstrument (12) so ausgelegt ist, dass mit ihm koordinierte und vorbestimmte Funktionen des ersten Anzeigeinstruments (12) und des zweiten Anzeigeinstruments (12) auf der Basis der vom ersten Typ einer Messeinrichtung (15) und/oder dem zweiten Typ einer Messeinrichtung (15) durchgeführten Messungen aktivierbar sind.

9. Verfahren zur Konfiguration einer Anzeigeeinrichtung (12) mit einer Displayeinrichtung (20) und einem mit der Displayeinrichtung (20) verbundenen Steuerkreis (30);
bei dem die Displayeinrichtung (20) eine Vielzahl von Displayelementen (22, 25, 26, 28, 29) aufweist, die vom Steuerkreis (30) wahlweise zur Anzeige ausgewählter Displayelemente sowie zur Unsichtbarmachung von aus der Vielzahl von Displayelementen (22, 25, 26, 28, 29) nicht selektierter Displayelemente betätigbar sind;
**gekennzeichnet durch** den Schritt der
- Einstellung des Steuerkreises (30) mittels einer externen Einrichtung (45) zur wahlweisen Betätigung der Vielzahl von Displayelementen (22, 25, 26, 28, 29) auf der Basis des an den Steuerkreis (30) anschließbaren Typs einer Messeinrichtung (15).

## Revendications

1. Instrument indicateur comprenant :
- un dispositif d'affichage (20) ;
- un circuit de commande (30) connecté au dit dispositif d'affichage (20) et agencé pour transmettre au dit dispositif d'affichage (20) des signaux indiquant des valeurs mesurées par un certain type de dispositif de mesure (15) pouvant être connecté au dit circuit de commande (30) ; ledit dispositif d'affichage (20) comportant une pluralité d'entités d'affichage (22, 25, 26, 28, 29) qui peuvent être actionnées de façon sélective par ledit circuit de commande (30) en vue de rendre visibles les entités d'affichage sélectionnées et pour laisser invisibles les entités d'affichage non sélectionnées de ladite pluralité d'entités d'affichage (22, 25, 26, 28, 29) ;
**caractérisé en ce que**
ledit circuit de commande (30) comprend :
- un dispositif de communications (34) apte à être connecté à un dispositif externe (45) configuré pour régler ledit circuit de commande (30) afin d'actionner sélectivement ladite pluralité d'entités d'affichage (22, 25, 26, 28, 29) sur la base du type de dispositif de mesure (15) pouvant être connecté au dit circuit de commande (30).

2. Instrument indicateur (12) selon la revendication 1, **caractérisé en ce que** ladite pluralité d'entités d'affichage (22, 25, 26, 28, 29) comporte des entités d'affichage pouvant être sélectionnées à partir d'un groupe comprenant
- des icônes (22) représentant des types d'instrument de mesure ;
- des marques graphiques (25) ;
- des entités d'affichage (26, 28) permettant d'afficher des valeurs numériques.

3. Instrument indicateur (12) selon la revendication 1 ou 2, **caractérisé en ce que** ledit dispositif de communications (34) est configuré sous la forme d'un port de type série.

4. Instrument indicateur (12) selon la revendication 1 ou 2, **caractérisé en ce que** ledit dispositif de communications (34) est apte à être connecté à au moins un instrument indicateur supplémentaire (12) en vue de communiquer avec ledit au moins un instrument indicateur supplémentaire (12) à travers un certain protocole de communications.

5. Instrument indicateur (12) selon la revendication 4 **caractérisé en ce que** ledit certain protocole de communications est un protocole de Circuits Inter Intégrés (12C).

6. Instrument indicateur (12) selon la revendication 4 ou 5 configuré pour coopérer avec ledit au moins un instrument indicateur supplémentaire (12) afin d'activer des alarmes synchrones comportant des fonctions sélectionnées à partir du groupe constituées par :
- une activation synchrone de dispositifs d'affichage (20) associés auxdits instruments indicateurs (12) interconnectés les uns avec les autres ;
- une activation en alternance desdits dispositifs d'affichage (20) ;
- une activation combinée de ladite activation asynchrone et de ladite activation en alternance.

7. Système de mesure comprenant au moins un premier instrument indicateur (12) selon les revendications 1 à 6 et au moins un premier dispositif de mesure (15) connecté au dit instrument indicateur (12).

8. Système de mesure selon la revendication 7 comportant
- au moins un second instrument indicateur (12) et au moins un second dispositif de mesure (15) connecté au dit second instrument indicateur (12) ;
ledit premier instrument indicateur ayant un premier niveau de priorité, et ledit second instrument indicateur étant connecté au dit premier instrument indicateur et ayant un second niveau de priorité inférieur au dit premier niveau de priorité ;
de sorte que ledit premier instrument indicateur (12) est configuré en vue d'activer des fonctions prédéterminées et coordonnées dudit premier instrument indicateur (12) et dudit second instrument indicateur (12) sur la base des mesures effectuées par ledit premier type de dispositif de mesure (15) et/ou par ledit second type de dispositif de mesure (15).

9. Procédé servant à configurer un dispositif indicateur (12) comportant un dispositif d'affichage (20) et un circuit de commande (30) connecté au dit dispositif d'affichage (20) ;
dans lequel ledit dispositif d'affichage (20) comprend une pluralité d'entités d'affichage (22, 25, 26, 28, 29) qui peuvent être actionnées sélectivement par ledit circuit de commande (30) en vue de rendre visibles des entités d'affichage sélectionnées et de laisser invisibles des entités d'affichage non sélectionnées de ladite pluralité d'entités d'affichage (22, 25, 26, 28, 29) ;
**caractérisé par** l'étape consistant à
- régler au moyen d'un dispositif externe (45) ledit circuit de commande (30) pour activer de façon sélective ladite pluralité d'entités d'affichage (22, 25, 26, 28, 29) sur la base du type de dispositif de mesure (15) pouvant être connecté au dit circuit de commande (30).
